# FASCICULE DE BREVET EUROPEEN

(11) **EP 1 467 881 B1**
(45) Date de publication et mention de la délivrance du brevet: **26.05.2010**
(21) Numéro de dépôt: 02806562.1
(22) Date de dépôt: 11.12.2002
(51) Int. Cl.: B60J 7/20

(54) **TABLETTE ARRIERE POUR VEHICULE AUTOMOBILE DOTE D UN TOIT REPLIABLE**
RÜCKPLATTE FÜR EIN MIT EINEM KLAPPVERDECK AUSGESTATTETES KRAFTFAHRZEUG
REAR PANEL FOR A MOTOR VEHICLE FITTED WITH A CONVERTIBLE ROOF

(30) Priorité: 21.01.2002 FR 0200699
(43) Date de publication de la demande: 20.10.2004
(73) Titulaire: Société Européenne de Brevets Automobiles, 75011 Paris 11 (FR)
(72) Inventeur: QUEVEAU, Gérard, F-79140 Le Pin (FR); GUILLEZ, Jean-Marc, F-79140 Cirières (FR); QUEVEAU, Paul, F-79140 Montravers (FR)
(74) Mandataire: Novagraaf Technologies
(86) Numéro de dépôt international: PCT/FR2002/004289
(87) Numéro de publication internationale: WO 2003/062000

(56) Documents cités:
- DE-A- 3 743 502
- US-A- 6 030 023
- US-A- 6 145 915

## Description

La présente invention concerne une tablette arrière de véhicule automobile, et plus particulièrement de véhicule automobile doté d'un toit repliable dans le coffre arrière et de moyens de guidage aptes à faire passer ladite tablette d'une première position d'utilisation fermée où elle s'étend sensiblement horizontalement entre un élément du châssis du véhicule et le bord avant d'un couvercle dudit coffre, à une position escamotée où elle est disposée sensiblement verticalement de manière à dégager un espace de passage pour ledit toit entre ledit élément de châssis et ledit bord avant.

On connaît par example dans le document US 6 145 915, de tels véhicules dotés d'un toit repliable dans leur coffre arrière.

Ce toit peut en particulier être constitué d'une pluralité de parties de toit rigides susceptibles soit de fermer l'habitacle du véhicule à la manière d'un coupé ou d'une berline, soit de se ranger dans le coffre arrière pour en former un cabriolet.

Ces véhicules sont par ailleurs dotés d'une tablette arrière joignant la partie supérieure des dossiers des sièges arrières à l'extrémité avant du couvercle du coffre.

Diverses propositions ont déjà été formées pour escamoter cette tablette en position verticale lors du passage du toit d'une position à une autre de manière à libérer un passage pour les éléments du toit.

Le problème qui se pose alors est celui de la hauteur de la tablette lorsqu'elle est dans cette position, ainsi que de sa position longitudinale. Cette hauteur ne doit en effet pas être trop importante pour que la tablette n'interfère pas avec le toit. Par ailleurs, la tablette doit être la plus avancée possible pour dégager le maximum d'espace longitudinal entre elle et le bord avant du couvercle du coffre pour le passage des éléments du toit.

Un autre problème qui se pose est celui de l'interposition du bord arrière de la partie arrière du toit entre le bord arrière de la tablette et le bord avant du couvercle du coffre lorsque le toit est dans sa position fermeture où il recouvre l'habitacle du véhicule.
En effet, dans cette position, l'épaisseur du bord arrière de la partie arrière du toit occupe un certain encombrement longitudinal de sorte qu'il est nécessaire d'escamoter une partie de l'encombrement longitudinal de la tablette arrière lorsque le toit est en position de fermeture.

La présente invention vise à fournir une tablette arrière permettant de résoudre ces problèmes.

A cet effet, un objet de l'invention est une tablette arrière pour véhicule automobile doté d'un toit repliable dans le coffre arrière et de moyens de guidage aptes à faire passer ladite tablette d'une première position fermée où elle s'étend sensiblement horizontalement entre un élément du châssis du véhicule et le bord avant d'un couvercle dudit coffre, à une position escamotée où elle est disposée sensiblement verticalement de manière à dégager un espace de passage pour ledit toit entre ledit élément de châssis et ledit bord avant, caractérisée par le fait qu'elle comprend une partie longitudinalement avant et une partie longitudinalement arrière, et en ce que les moyens de guidage sont agencés pour amener en position escamotée lesdites parties longitudinalement avant et longitudinalement arrière sensiblement parallèles l'une à l'autre, la partie avant étant en avant de la partie arrière, et pour amener cesdites parties dans une deuxième position fermée où la tablette est disposée sensiblement horizontalement entre le châssis et le bord arrière de la partie arrière de toit, le bord arrière de la partie longitudinalement avant étant en recouvrement avec le bord avant de la partie longitudinalement arrière.

On comprend que, les deux parties étant disposées longitudinalement côte à côte dans la position escamotée verticale de la tablette, l'encombrement vertical de cette dernière est diminué. Il est en outre possible de l'avancer pour libérer un passage longitudinalement maximal pour les éléments du toit.

Par ailleurs, du fait du recouvrement partiel des parties de tablette dans la deuxième position fermée, l'encombrement longitudinal total de la tablette est diminué, assurant ainsi un espace suffisant pour loger le bord arrière de la partie arrière du toit.

Dans un mode de réalisation particulier, la partie longitudinalement avant de la tablette est montée à rotation autour d'un axe transversal solidaire du châssis du véhicule.

Egalement dans un mode de réalisation particulier, la partie longitudinalement arrière de la tablette est articulée autour de deux axes transversaux à de premières extrémités de deux bielles, dont les autres extrémités sont articulées chacune sur le châssis du véhicule autour d'un axe transversal de manière à former un parallélogramme déformable.

Un autre objet de l'invention est un véhicule automobile caractérisé par le fait qu'il comprend une tablette arrière telle que décrite ci-dessus.

On décrira maintenant à titre d'exemple non limitatif un mode de réalisation particulier de l'invention en référence aux dessins schématiques annexés dans lesquels :
- la figure 1 est une vue en coupe longitudinale de la partie arrière d'un véhicule selon l'invention avec le toit replié dans le coffre arrière et la tablette en position de fermeture ;
- la figure 2 est une vue similaire à la figure 1 avec la tablette en position d'ouverture ; et
- la figure 3 est une vue similaire aux figures 1 et 2 avec le toit en position de fermeture de l'habitacle du véhicule et la tablette arrière également en position de fermeture.

Le véhicule représenté aux dessins comprend un châssis 1, un coffre arrière 2 fermé par un couvercle 3 et une tablette arrière formée d'une partie longitudinalement avant 4 et d'une partie longitudinalement arrière 5.

Par longitudinalement, on entend dans la direction avant (flèche AV) / arrière (flèche AR) du véhicule. La direction transverse est la direction perpendiculaire au plan des figures.

La tablette arrière est donc divisée transversalement en deux parties.

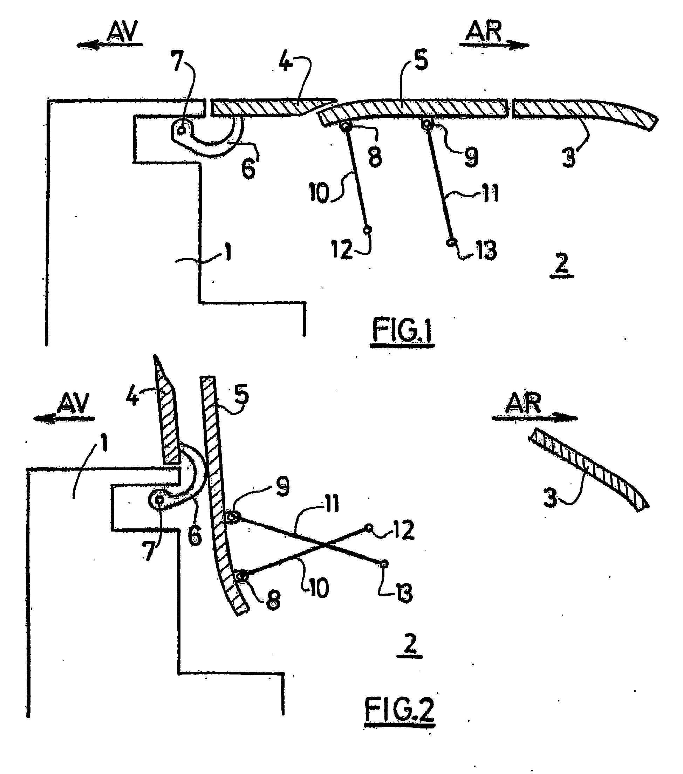

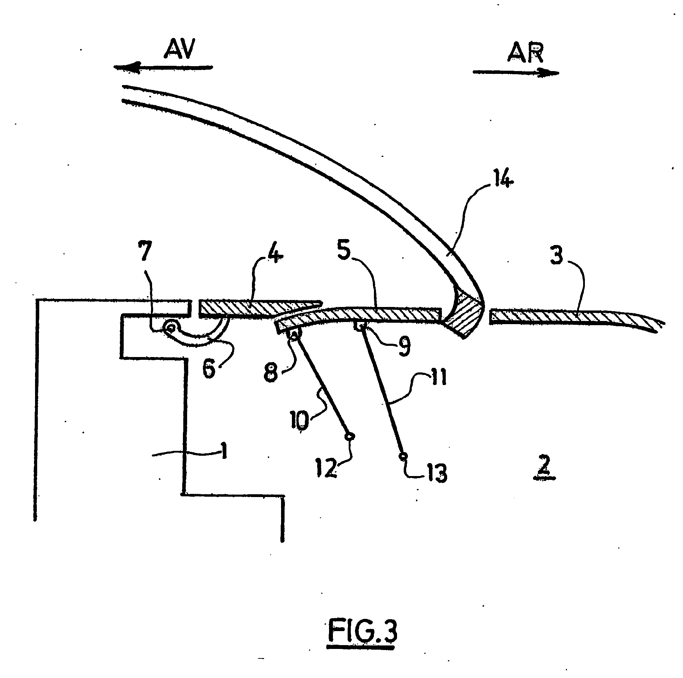

Le bord arrière de la partie avant 4 est ici aminci et le bord avant de la partie arrière est légèrement recourbé vers le bas, de manière à obtenir un raccordement satisfaisant des deux parties dans les deux positions fermées de la tablette. Le recouvrement est toutefois moindre dans la position de la figure 1 (toit ouvert) que dans celle de la figure 3 (toit fermé).

La partie avant 4 est montée par l'intermédiaire d'un levier 6 dont elle est solidaire, pivotante autour d'un axe transversal 7 fixe par rapport au châssis.

La partie arrière 5 est munie d'une chape avant 8 et d'une chape arrière 9 sur lesquelles sont articulées autour d'axes transversaux les extrémités de deux biellettes 10 et 11 respectivement.

Les autres extrémités des biellettes sont articulées en 12 et 13 respectivement autour d'axes transversaux fixes par rapport au châssis.

Ainsi, la partie 5 est montée sur le châssis par un parallélogramme déformable.

Dans la position de la figure 1, le bord avant de la partie 4 de la tablette est jointif avec le bord arrière du châssis 1 avec un léger recouvrement, le bord avant de la partie 5 de la tablette est jointif avec le bord arrière de la partie 4 de la tablette, et le bord avant du couvercle 3 est jointif avec le bord arrière de la partie 5 de la tablette.

Le levier 6 et l'axe 7 permettent de faire pivoter vers le haut la partie 4 de la tablette comme représenté à la figure 2.

Dans cette position, la partie 4 est sensiblement verticale au-dessus du châssis.

Egalement dans cette figure, le parallélogramme déformable constitué par les biellettes 10 et 11 a également amené la partie 5 de la tablette en position sensiblement verticale, parallèle à la partie 4, le bord avant de la partie 5 recouvrant la partie 4.

Dans cette position, le couvercle 3 a été basculé autour de son bord arrière de sorte qu'un espace de passage est disponible entre le bord avant du couvercle 3 et les bords supérieurs des parties 4 et 5 de la tablette.

Enfin, dans la figure 3, le bord arrière de la partie arrière 14 du toit est venu se disposer juste en avant du bord avant du couvercle 3. La partie avant 4 de la tablette est revenue dans sa position de la figure 1 et la partie arrière 5 de la tablette est venue en butée contre le bord arrière de la partie 14 du toit qui se trouve donc interposée entre le bord arrière de la partie arrière 5 de la tablette et le bord avant du couvercle 3.

Le parallélogramme déformable constitué par les biellettes 10 et 11 n'est toutefois par revenu exactement à la même position que celle de la figure 1, de sorte que le bord arrière de la partie avant 4 de la tablette chevauche le bord avant de la partie arrière 5 de la tablette sur une distance longitudinale sensiblement égale à l'épaisseur du bord arrière de la partie arrière 14 du toit.

L'agencement qui vient d'être décrit permet donc, par le chevauchement des parties 4 et 5 de la tablette, de gagner dans la dimension longitudinale de cette dernière l'épaisseur du bord arrière du toit.

La tablette peut être manoeuvrée par tout moyen connu, tel qu'un moteur ou un vérin, pour l'amener dans ses trois positions des figures 1 à 3.

## Revendications

1. Tablette arrière pour véhicule automobile doté d'un toit repliable dans le coffre arrière (2) et de moyens de guidage aptes à faire passer ladite tablette d'une première position d'utilisation où elle s'étend sensiblement horizontalement entre un élément du châssis (1) du véhicule et le bord avant d'un couvercle (3) dudit coffre, à une position escamotée où elle est disposée sensiblement verticalement de manière à dégager un espace de passage pour ledit toit entre ledit élément de châssis (1) et ledit bord avant **caractérisée par le fait qu'**elle comprend une partie longitudinalement avant (4) et une partie longitudinalement arrière (5), et en ce que les moyens de guidage sont agencés pour amener en position escamotée lesdites parties longitudinalement avant (4) et longitudinalement arrière (5) sensiblement parallèles l'une à l'autre, l'une desdites parties recouvrant l'autre, et pour amener cesdites parties (4,5) dans une deuxième position fermée où la tablette est disposée sensiblement horizontalement entre le châssis (1) et le bord arrière de la partie arrière (14) de toit, le bord arrière de la partie longitudinalement avant (4) étant en recouvrement avec le bord avant de la partie longitudinalement arrière (5).

2. Tablette selon la revendication 1, **caractérisée par le fait que** la partie longitudinalement avant (4) de ladite tablette est montée à rotation autour d'un axe transversal (7) solidaire du châssis (1) du véhicule.

3. Tablette selon la revendication 1 ou 2, **caractérisée par le fait que** la partie longitudinalement arrière (5) de la tablette est articulée autour de deux axes transversaux à de premières extrémités de deux bielles (10, 11), dont les autres extrémités sont articulées chacune sur le châssis (1) du véhicule autour d'un axe transversal de manière à former un parallélogramme déformable.

4. Véhicule automobile **caractérisé par le fait qu'**il comprend une tablette arrière selon l'une des revendications 1 à 3.

## Claims

1. A parcel shelf for a motor vehicle provided with a roof which can be folded in the rear trunk (2) and guiding means able to make said parcel shelf move from a first utilisation position in which it extends substantially horizontally between an element of the chassis (1) of the vehicle and the front edge of a cover (3) of said rear trunk, to a retracted position in which it is positioned substantially vertically so as to clear space for said roof to move between said chassis element (1) and said front edge, **characterized in that** it includes a longitudinal front part (4) and a longitudinal rear part (5), and **in that** the guiding means are so arranged as to bring said longitudinal front part (4) and longitudinal rear part (5) in the retracted position, substantially parallel to each other, with one of said parts covering the other one, and to bring said parts (4, 5) to a second closed position in which the parcel shelf is positioned substantially horizontally between the chassis (1) and the rear edge of the rear part (14) of the roof, with the rear edge of the longitudinal front part (4) covering the front edge of the longitudinal rear part (5).

2. A parcel shelf according to claim 1, **characterized in that** the longitudinal front part (5) of said parcel shelf is mounted to rotate about a transversal axis (7) integral with the chassis of the vehicle.

3. A parcel shelf according to claim 1 or 2, **characterized in that** the longitudinal rear part (5) of the parcel shelf is articulated about two axes transversal to first ends of two connection rods (10, 11), the other ends of which are, each, articulated on the chassis (1) of the vehicle, about a transversal axis so as to form an expanding parallelogram.

4. A motor vehicle **characterized in that** it includes a rear parcel shelf according to one of claims 1 to 3.

## Patentansprüche

1. Heckablage für ein Kraftfahrzeug, das mit einem Faltdach im hinteren Kofferraum (2) und mit Führungsmitteln ausgestattet ist, die geeignet sind, die genannte Ablage von einer ersten Nutzungsposition, in der sie sich deutlich horizontal zwischen einem Element des Fahrgestells (1) des Fahrzeugs und dem vorderen Rand eines Deckels (3) des genannten Kofferraums erstreckt, in eine eingefahrene Position übergehen zu lassen, in der sie deutlich vertikal derart angeordnet ist, dass sie einen Durchgangsraum für das genannte Dach zwischen dem genannten Fahrgestellelement (1) und dem genannten vorderen Rand freigibt, **gekennzeichnet durch** die Tatsache, dass sie einen vorderen Teil in Längsrichtung (4) und einen hinteren Teil in Längsrichtung (5) umfasst und dass die Führungsmittel angeordnet sind, um die genannten vorderen Teile in Längsrichtung (4) und die genannten hinteren Teile in Längsrichtung (5) deutlich parallel zueinander zu bringen, wobei eines der genannten Teile das andere abdeckt, und um diese genannten Teile (4, 5) in eine zweite, geschlossene Position zu bringen, in der die Ablage deutlich horizontal zwischen dem Fahrgestell (1) und dem hinteren Rand des hinteren Teils (14) des Daches angeordnet ist, wobei der hintere Rand des vorderen Teils (4) in Längsrichtung in Abdeckung mit dem vorderen Rand des hinteren Teils (5) in Längsrichtung ist.

2. Ablage gemäß Anspruch 1, **gekennzeichnet durch** die Tatsache, dass der vordere Teile in Längsrichtung (4) der genannten Ablage rotierend um eine transversale Achse (7) montiert ist, die fest mit dem Fahrgestell (1) des Fahrzeugs verbunden ist.

3. Ablage gemäß Anspruch 1 oder 2, **gekennzeichnet durch** die Tatsache, dass der hintere Teil in Längsrichtung (5) der Ablage um zwei transversale Achsen an ersten Enden von zwei Pleuelstangen (10, 11) artikuliert ist, deren andere Enden jeweils auf dem Fahrgestell (1) des Fahrzeugs um eine transversale Achse derart artikuliert sind, dass ein verformbares Parallelogramm gebildet wird.

4. Kraftfahrzeug, **gekennzeichnet durch** die Tatsache, dass es eine hintere Ablage gemäß Anspruch 1 bis 3 umfasst.
